# EUROPÄISCHE PATENTSCHRIFT

(11) **EP 4 314 582 B1**
(45) Veröffentlichungstag und Bekanntmachung des Hinweises auf die Patenterteilung: **26.11.2025**
(21) Anmeldenummer: 22710410.6
(22) Anmeldetag: 08.03.2022
(51) Int. Cl.: F16D 1/10, F16D 3/06, F16D 59/02, F16D 65/00, F16D 65/12

(54) **BREMSANORDNUNG MIT EINEM EINE VERZAHNUNG AUFWEISENDEN VERZAHNTEIL UND ZUMINDEST EINEM FEDERTEIL**
BRAKING DEVICE WITH A TOOTHED ELEMENT AND AT LEAST ONE ELASTIC ELEMENT
DISPOSITIF DE FREINAGE COMPRENANT UNE ÉLÉMENT DENTE ET AU MOINS UN ÉLÉMENT ÉLASTIQUE

(30) Priorität: 26.03.2021 DE 102021001598
(43) Veröffentlichungstag der Anmeldung: 07.02.2024
(73) Patentinhaber: SEW-EURODRIVE GmbH & Co. KG, 76646 Bruchsal (DE)
(72) Erfinder: FICHTNER-PFLAUM, Gerolf, 76703 Kraichtal-Unteröwisheim (DE)
(86) Internationale Anmeldenummer: PCT/EP2022/055912
(87) Internationale Veröffentlichungsnummer: WO 2022/200037

(56) Entgegenhaltungen:
- DE-A1- 102006 019 453
- DE-A1- 19 855 025

## Beschreibung

Die Erfindung betrifft eine Bremsanordnung mit einem eine Verzahnung aufweisenden Verzahnteil und zumindest einem Federteil.

Es ist allgemein bekannt, dass eine Bremsanordnung mit einem eine Verzahnung aufweisenden Verzahnteil, wie innenverzahnter Bremsbelagträger ausgeführt ist.

**Aus der** US 2006 / 0 027 428 A1 **ist eine Bremsanordnung bekannt.**

**Aus der** DE 34 41 304 A1 **ist eine Scheibenbremseinrichtung bekannt.**

**Aus der** DE 198 55 025 A1 **ist als nächstliegender Stand der Technik eine Federung für Zahnkupplung bekannt.**

**Aus der** DE 10 2006 019 453 A1 **ist eine Zahnkupplung mit Federung und Elektromotor mit Bremse bekannt, die über eine Zahnkupplung angebunden ist.**

Der Erfindung liegt daher die Aufgabe zugrunde, eine Bremsanordnung sicher zu betreiben.

Erfindungsgemäß wird die Aufgabe bei der Bremsanordnung nach den in Anspruch 1 angegebenen Merkmalen gelöst.

Wichtige Merkmale der Erfindung bei der Bremsanordnung mit einem eine Verzahnung aufweisenden Verzahnteil und zumindest einem Federteil sind, dass das Federteil ein Jochbereich aufweist, das mit einem ersten Bügelbereich des Federteils verbunden ist, welches an seinem vom Jochbereich abgewandten Ende mit einem ersten Endbereich des Federteils verbunden ist,
wobei das Federteil auf die Verzahnung derart aufgesteckt ist, dass
- der erste Bügelbereich des Federteils zumindest teilweise in einer Zahnlücke der Verzahnung angeordnet ist,
- der Jochbereich in eine erste am Verzahnteil ausgebildete Ringnut eingreift,
- der erste Endbereich in eine zweite am Verzahnteil ausgebildete Ringnut eingreift.

Von Vorteil ist dabei, dass das Federteil sich am Verzahnteil elastisch anklammert und dabei in radialer Richtung formschlüssig verbunden ist, da der Endbereich und der Jochbereich in die jeweilige Ringnut eingreifen. In Umfangsrichtung ist das Federteil durch die Verzahnung formschlüssig gehalten. Axial ist dadurch, dass die ringnuten radial beabstandet von der Verzahnung angeordnet sind, eine formschlüssige Verbindung erreicht. Die Haltekraft ist allerdings elastisch durch Aufdehnen des Federteils in axialer Richtung erzeugt. Das Federteil ermöglicht, auf ein weiteres Verzahnteil eine durch elastisches Verbiegen des Federteils erzeugte Kraft auszuüben, wobei die Verzahnung des weiteren Verzahnteils mit der Verzahnung des ersten Verzahnteils im Eingriff steht. Die Kraft ist im Wesentlichen radial gerichtet. Somit ist ein Klappern, also eine Geräuschemission der Bremsanordnung, verringerbar. Außerdem ist der Betrieb durch das Federteil wohldefiniert, da kein loses Spiel zwischen Bremsbelagträger und Mitnehmer auftritt. Auch dadurch ist ein sicherer wohldefinierter Betrieb ermöglicht.

Bei einer vorteilhaften Ausgestaltung ist ein vom ersten Bügelbereich beabstandeter zweiter Bügelbereich des Federteils mit dem Jochteil verbunden, welcher an seinem vom Jochteil abgewandten Ende mit einem zweiten Endbereich des Federteils verbunden ist,
- der zweite Bügelbereich des Federteils zumindest teilweise in einer zweiten Zahnlücke der Verzahnung angeordnet ist,
- der zweite Endbereich in die zweite am Verzahnteil ausgebildete Ringnut eingreift.

Von Vorteil ist dabei, dass das Federteil symmetrisch gehalten und somit zentriert ist. Das Federteil ist somit symmetrisch abstützbar und erzeugt somit eine möglichst genau in radialer Richtung ausgerichtete Druckkraft, die dem weiteren Verzahnteil zugeführt wird. Durch den wohldefinierten sicheren Sitz des Federteils ist auch ein wohldefiniertes mittiges Sitzen des Bremsbelagträgers erreichbar und somit eine Zentrierung zum Mitnehmer hin. In Weiterbildung sind hierzu mehrere identisch ausgeführte Federteile am Umfang des Verzahnteils angeordnet, die in Umfangsrichtung voneinander regelmäßig und/oder gleichmäßig beabstandet sind.

Bei einer vorteilhaften Ausgestaltung ist die erste Ringnut in einen ebenen Oberflächenbereich des Verzahnteils eingebracht, dessen Normalenvektor parallel zur axialen Richtung ausgerichtet ist,
wobei die Ringachse der zweiten Ringnut der Drehachse des Verzahnteils gleicht,
insbesondere wobei die Nutöffnung der ersten Ringnut zur axialen Richtung hin geöffnet ist, insbesondere wobei die Ringnut in Umfangsrichtung um die Drehachse herum ununterbrochen ausgeführt ist. Von Vorteil ist dabei, dass der erste ebene Oberflächenbereich eine zur axialen Richtung ausgerichtete Stirnfläche ist. Somit greift Jochbereich aus axialer Richtung herkommend in die erste Ringnut ein. Daher ist in einfacher Weise eine in radialer Richtung formschlüssige Verbindung des Federteils mit dem Verzahnteil erreichbar.

Bei einer vorteilhaften Ausgestaltung ist die zweite Ringnut in einen zweiten ebenen Oberflächenbereich des Verzahnteils eingebracht, dessen Normalenvektor parallel zur axialen Richtung ausgerichtet ist,
wobei die Ringachse der ersten Ringnut der Drehachse des Verzahnteils gleicht,
insbesondere wobei die Nutöffnung der zweiten Ringnut entgegengerichtet zur axialen Richtung hin geöffnet ist. Von Vorteil ist dabei, dass der zweite ebene Oberflächenbereich eine zur axialen Richtung ausgerichtete Stirnfläche ist. Somit greifen die Endbereiche in die zweiten Ringnuten ein, welche zur axialen Richtung entgegengesetzt geöffnet sind. Daher ist in einfacher Weise eine in radialer Richtung formschlüssige Verbindung des Federteils mit dem Verzahnteil erreichbar.

Bei einer vorteilhaften Ausgestaltung ist die Verzahnung eine Außenverzahnung und der von der ersten und zweiten Ringnut überdeckte, auf die Drehachse des Verzahnteils bezogene Radialabstandsbereich beabstandet von dem von der Verzahnung überdeckten Radialabstandsbereich und/oder radial innerhalb des von der Verzahnung überdeckten Radialabstandsbereichs angeordnet,
insbesondere wobei das Verzahnteil als Mitnehmer ausgeführt ist. Von Vorteil ist dabei, dass das Federteil von radial außen kommend auf die Verzahnung aufsteckbar ist und dabei mit seinem Jochbereich beziehungsweise mit seinen Endbereichen in die Ringnuten einklammert. Somit ist das beim Aufstecken auf die Verzahnung aufgeweitete Federteil in einfacher Weise befestigbar am Verzahnteil.

Bei einer alternativen vorteilhaften Ausgestaltung ist die Verzahnung eine Innenverzahnung und der von der ersten und zweiten Ringnut überdeckte, auf die Drehachse des Verzahnteils bezogene Radialabstandsbereich beabstandet von dem von der Verzahnung überdeckten Radialabstandsbereich und/oder radial außerhalb des von der Verzahnung überdeckten Radialabstandsbereichs angeordnet,
insbesondere wobei das Verzahnteil als Bremsbelagträger ausgeführt ist. Von Vorteil ist dabei, dass das Federteil von radial innen kommend auf die Verzahnung aufsteckbar ist und dabei mit seinem Jochbereich beziehungsweise mit seinen Endbereichen in die Ringnuten einklammert. Somit ist das beim Aufstecken auf die Verzahnung aufgeweitete Federteil in einfacher Weise befestigbar am Verzahnteil.

Bei einer vorteilhaften Ausgestaltung weist die Bremsanordnung eine Welle, insbesondere Rotorwelle eines Elektromotors, auf,
wobei ein Mitnehmer auf die Welle aufgesteckt und mit der Welle drehfest verbunden ist,
wobei ein Bremsbelagträger auf den Mitnehmer aufgesteckt ist und eine Innenverzahnung des Bremsbelagträgers mit einer Außenverzahnung des Mitnehmers im Eingriff ist, so dass der Bremsbelagträger drehfest mit dem Mitnehmer verbunden ist aber axial verschiebbar relativ zum Mitnehmer angeordnet ist. Von Vorteil ist dabei, dass die Bremse elektromagnetisch betätigbar ist. Außerdem ist der Bremsbelagträger auf dem Mitnehmer axial verschiebbar und somit auf eine Bremsfläche drückbar, insbesondere von einer Ankerscheibe.

Bei einer vorteilhaften Ausgestaltung weist die Bremsanordnung einen Magnetkörper, insbesondere ferromagnetischen Magnetkörper, auf, in welchem eine bestrombare Spule, insbesondere Spulenwicklung, aufgenommen ist,
wobei die Welle mittels in einem Gehäuseteil, insbesondere Lagerflansch, aufgenommenen Lager drehbar gelagert ist, insbesondere relativ zum Magnetkörper,
wobei eine ferromagnetische Ankerscheibe axial zwischen dem Bremsbelagträger und dem Magnetkörper angeordnet ist, wobei die Ankerscheibe drehfest mit dem Magnetkörper verbunden ist aber axial verschiebbar angeordnet ist, insbesondere relativ zum Magnetkörper,
wobei bei Bestromung der Spule die Ankerscheibe entgegen der von am Magnetkörper abgestützten Federelementen erzeugten Federkraft zum Magnetkörper hingezogen wird und bei Nichtbestromung der Spule die Ankerscheibe von den Federelementen derart auf den Bremsbelagträger gedrückt wird, dass der Bremsbelagträger auf eine auf der von der Ankerscheibe abgewandten Seite des Bremsbelagträgers angeordnete Bremsfläche gedrückt wird,
insbesondere wobei die Bremsfläche
   - entweder an einem Lagerflansch des Elektromotors ausgebildet ist, wobei im Lagerflansch ein die Rotorwelle drehbar lagerndes Lager aufgenommen ist und der Lagerflansch mit dem Magnetkörper drehfest verbunden ist,
   - oder an einem mit dem Magnetkörper drehfest verbundenen Blechteil ausgebildet ist.

Von Vorteil ist dabei, dass bei Stromausfall die Bremse automatisch einfällt. Somit ist die Sicherheit erhöht. Außerdem ist der Betrieb durch das Federteil wohldefiniert, da kein loses Spiel zwischen Bremsbelagträger und Mitnehmer auftritt. Auch dadurch ist ein sicherer wohldefinierter Betrieb ermöglicht.

Bei einer vorteilhaften Ausgestaltung ist der an der ersten Ringnut abgestützte, erste Bügelbereich elastisch derart ausgelenkt, dass der erste Bügelbereich auf einen ersten Zahnkopf der Verzahnung eines zweiten Verzahnteils drückt, insbesondere in radialer Richtung drückt, wobei die Verzahnung des zweiten Verzahnteils mit der Verzahnung des ersten Verzahnteils im Eingriff ist. Von Vorteil ist dabei, dass das zweite Verzahnteil zum ersten Verzahnteil hin zentriert und ausgerichtet ist. Somit ist ein wohldefinierter spielfreier und somit sicherer Betrieb gewährleistet.

Bei einer vorteilhaften Ausgestaltung ist der an der zweiten Ringnut abgestützte, zweite Bügelbereich elastisch derart ausgelenkt, dass der zweite Bügelbereich auf einen zweiten Zahnkopf der Verzahnung eines zweiten Verzahnteils drückt, insbesondere in radialer Richtung drückt, wobei die Verzahnung des zweiten Verzahnteils mit der Verzahnung des ersten Verzahnteils im Eingriff ist. Von Vorteil ist dabei, dass ein spielfreier und somit wohldefinierter Sitz des zweiten Verzahnteils relativ zum ersten Verzahnteil und dadurch ein sicherer Betrieb ermöglicht ist.

Bei einer vorteilhaften Ausgestaltung ist das Federteil als Biegeteil aus Runddraht hergestellt.

Von Vorteil ist dabei, dass die Herstellung kostengünstig ist und das Biegen mit hoher Präzision ausführbar ist, so dass gleichartige identische Federteile herstellbar sind, die am Umfang des Verzahnteils in regelmäßigen Abständen anordenbar sind.

Bei einer vorteilhaften Ausgestaltung sind die beiden Endbereiche des Federteils in Umfangsrichtung voneinander beabstandet und/oder auf derselben zweiten axialen Position angeordnet. Von Vorteil ist dabei, dass das Federteil einfach und mit hoher Präzision herstellbar ist aus einem Stück Runddraht. Somit sind mehrere identisch geformte Federteile am Umfang anordenbar und dadurch ein präzises Zentrieren und Ausrichten des Verzahnteils ermöglicht. Der Betrieb ist somit spielfrei ermöglicht und daher eine hohe Präzision erreichbar.

Bei einer vorteilhaften Ausgestaltung ist der Jochbereich an einer ersten axialen Position angeordnet und die Bügelbereiche erstrecken sich von der ersten zur zweiten axialen Position. Von Vorteil ist dabei, dass das Federteil axial vor und hinter der Verzahnung sich am Verzahnteil anklammert.

Bei einer vorteilhaften Ausgestaltung ist die Verzahnung eine Geradverzahnung. Von Vorteil ist dabei, dass der Bremsbelagträger axial verschiebbar ist, insbesondere ohne Drehung.

Bei einer vorteilhaften Ausgestaltung sind zum Federteil identisch und/oder gleichartig ausgebildete weitere Federteile am Umfang des Verzahnteils angeordnet, insbesondere auf demselben Radialabstand und/oder in Umfangsrichtung voneinander regelmäßig und/oder gleichmäßig beabstandet. Von Vorteil ist dabei, dass durch die verbesserte Zentrierung ein sicherer Betrieb ausführbar ist.

Bei einer vorteilhaften Ausgestaltung ist der Bremsbelagträger aus einem weicheren Material als der Mitnehmer ausgeführt. Von Vorteil ist dabei, dass durch das Federteil ein Spiel zwischen den Verzahnteilen verhinderbar ist und somit der Verschleiß reduzierbar ist.

Bei einer vorteilhaften Ausgestaltung ist der Mitnehmer aus Metall, insbesondere aus Stahl, ausgeführt. Von Vorteil ist dabei, dass ein geringer Verschleiß und somit eine lange Lebensdauer und ein langandauernder Betrieb ermöglicht ist.

Weitere Vorteile ergeben sich aus den Unteransprüchen.

Die Erfindung wird nun anhand von schematischen Abbildungen näher erläutert:

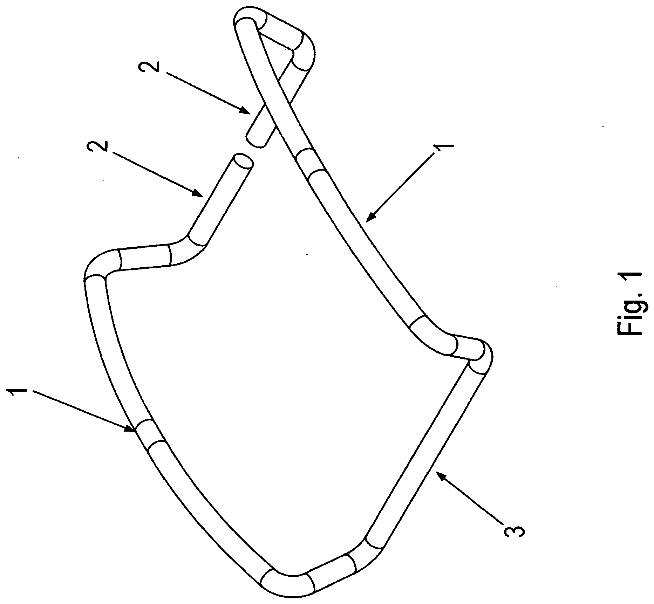

In der Figur 1 ist ein Federteil, insbesondere eine Federspange, in Schrägansicht dargestellt.
In der Figur 2 ist ein Mitnehmer 20 einer erfindungsgemäßen elektromagnetisch betätigbaren Bremse mit Federteil gezeigt.
In der Figur 3 ist ein Ausschnitt der Figur 2 vergrößert dargestellt.
Figur 4 zeigt ein alternatives Ausführungsbeispiel, bei welchem das Federteil auf die Innenverzahnung des Bremsbelagträgers 23 anstatt am Mitnehmer 20 aufgesteckt ist und an Ringnuten 21 des Bremsbelagträgers 23 abgestützt ist.

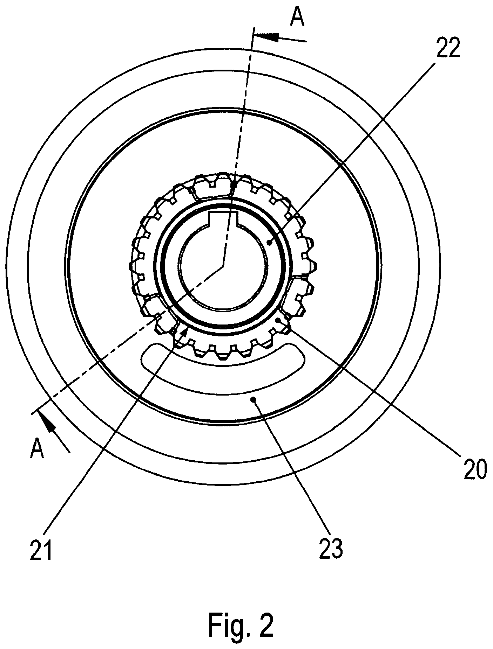

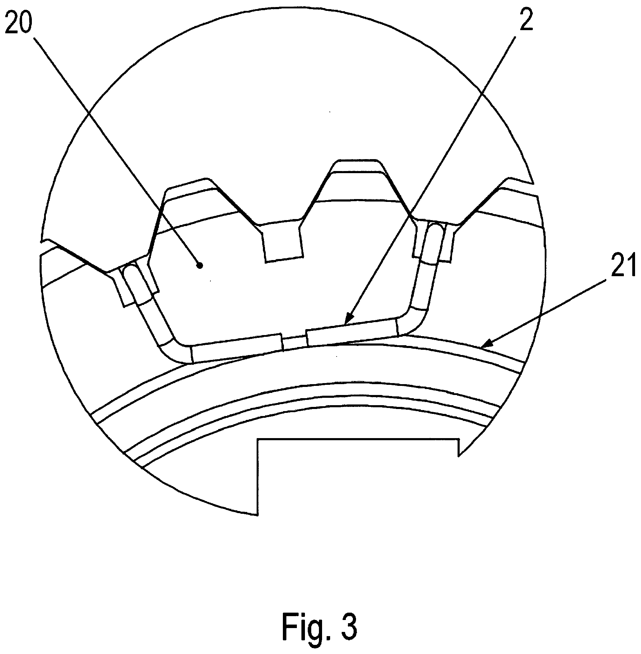

Wie in den Figuren 2 bis 4 gezeigt, weist einen Mitnehmer 20 eine Außenverzahnung auf, auf welche das Federteil aufgesteckt ist.

Die Bremse weist eine bestrombare Spule auf, die als Ringwicklung ausgeführt ist und in einer insbesondere ringförmigen Vertiefung eines ferromagnetischen Magnetkörpers aufgenommen ist.

Eine Rotorwelle 22 eines Elektromotors ist relativ zum Magnetkörper drehbar gelagert. Der Mitnehmer 20 ist als außenverzahnter ringförmiger Körper ausgeführt und auf die Rotorwelle 22 aufgesteckt. Die Rotorwelle 22 ist mit dem Mitnehmer 20 drehfest verbunden. Vorzugsweise ist hierfür eine Passfederverbindung verwendet.

Auf die Außenverzahnung des Mitnehmers 20 ist ein Bremsbelagträger 23 mit seiner Innenverzahnung aufgesteckt. Somit ist der Bremsbelagträger 23 mit dem Mitnehmer 20 drehfest aber axial verschiebbar verbunden.

Axial, also in Richtung der Drehachse der Rotorwelle 22, ist zwischen dem Bremsbelagträger 23 und dem Magnetkörper mit der Spule eine ferromagnetische Ankerscheibe angeordnet, die mit dem Magnetkörper drehfest, aber axial verschiebbar verbunden ist. Hierzu sind vorzugsweise axial sich erstreckende Bolzen im Magnetkörper befestigt, welche durch Löcher der Ankerscheibe durch die Ankerscheibe hindurchragen.

Bei Nicht-Bestromung der Spule wird die Ankerscheibe von einer von am Magnetkörper abgestützten Federelementen erzeugten Federkraft zum Bremsbelagträger 23 hingedrückt, so dass dieser auf eine Bremsfläche gedrückt wird. Diese vorzugsweise fein bearbeitete Bremsfläche ist entweder an einem Lagerflansch des Elektromotors ausgebildet, wobei im Lagerflansch ein die Rotorwelle 22 drehbar lagerndes Lager aufgenommen ist, oder an einem mit dem Magnetkörper drehfest verbundenen Blechteil. Die Bremse fällt also bei Nicht-Bestromung ein.

Bei Bestromung der Spule wird die Ankerscheibe entgegen der von den Federelementen erzeugten Federkraft zum Magnetkörper hingedrückt und somit der Bremsbelagträger 23 freigegeben. Bei Bestromung wird die Bremse also gelüftet.

Die Zähne der Innenverzahnung des Bremsbelagträgers 23 ragen in Zahnlücken der Außenverzahnung des Mitnehmers 20 hinein.

Der Mitnehmer 20 ist aus Metall, insbesondere Stahl, gefertigt. Der Bremsbelagträger 23 ist aus einem weicheren Material gefertigt als der Mitnehmer 20, insbesondere aus einem Harz, gefertigt.

Um Geräuschemissionen durch Klappern der beiden Verzahnungen zu verringern, ist das Federteil auf die Außenverzahnung des Mitnehmers 20 aufgesteckt.

Dabei weist das Federteil zwei Bügelbereiche 1 auf, die über einen Jochbereich 3 verbunden sind.

Der Jochbereich 3 ist somit zwischen den beiden Bügelbereichen 1 angeordnet und mit beiden Bügelbereichen 1 verbunden.

An dem vom Jochbereich 3 abgewandten Ende des jeweiligen Bügelbereichs 1 grenzt ein jeweiliger Endbereich 2 an.

Der jeweilige Bügelbereich 1 ist in eine jeweilige Zahnlücke der Außenverzahnung des Mitnehmers 20 eingelegt. Durch eine leichte Wölbung des jeweiligen Bügelbereichs 1 drückt der zur Innenverzahnung nächstliegende Bereich des Bügelbereichs 1 auf den Kopf eines Zahns der Innenverzahnung, welcher in diejenige Zahnlücke hineinragt, welche den Bügelbereich 1 aufnimmt.

Zumindest mittels des Jochbereichs 3, der in eine umlaufende Ringnut des Mitnehmers 20 eingreift, ist das Federteil abgestützt am Mitnehmer 20 und drückt mittels durch elastische Auslenkung des Federteils erzeugter Federkraft auf den jeweiligen Zahnkopf der Innenverzahnung.

Die Ringachse der ersten Ringnut 21 ist koaxial zur Drehachse der Rotorwelle 22 ausgerichtet. Die erste Ringnut 21 ist in zur axialen Richtung parallelen Richtung hin geöffnet. Die Nutwände begrenzen also das Ringnutvolumen in radialer Richtung beziehungsweise entgegen der radialen Richtung.

Eine zweite Ringnut ist am Mitnehmer 20 auf der von der ersten Ringnut 21 abgewandten Seite vorgesehen. Die Ringachse dieser zweiten Ringnut ist ebenfalls koaxial zur Drehachse der Rotorwelle 22 ausgerichtet. Die zweite Ringnut ist entgegen der axialen Richtung hin geöffnet. Die Nutwände der zweiten Ringnut begrenzen also deren Ringnutvolumen in radialer Richtung beziehungsweise entgegen der radialen Richtung.

Die Nutöffnung der ersten Ringnut 21 ist also entgegengesetzt gerichtet zur Nutöffnung der zweiten Ringnut.

Die zweite Ringnut ist koaxial, also parallel, ausgerichtet zur ersten Ringnut 21 und weist denselben Ringdurchmesser sowie dieselbe Ringachse auf.

Die Endbereiche 2 greifen in die zweite Ringnut elastisch vorgespannt ein.

Das Federteil ist derart geformt, dass es beim Aufstecken auf die Außenverzahnung elastisch vorgespannt ist und somit der Bügelbereich 3 und die Endbereiche 2 zueinander elastisch vorgespannt sind und das Federteil anklammern am Mitnehmer 20.

Durch dieses axial gerichtete Anklammern des Federteils and en Mitnehmer 20 ist das Federteil in radialer Richtung formschlüssig verbunden mit dem Mitnehmer 20.

Das Federteil ist als Biegeteil aus einem Draht hergestellt und weist vorzugsweise überall den selben Drahtquerschnitt auf. Somit ist es einfach und kostengünstig herstellbar.

Die erste Ringnut 21 und die zweite Ringnut sind auf kleinerem Radialabstand zur Drehachse der Rotorwelle 22 und/oder des Mitnehmers 20 angeordnet als der kleinste Radialabstand der jeweiligen Zahnlücke, in dem der jeweilige Bügelbereich 1 aufgenommen ist.

Insbesondere ist die erste Ringnut 21 in einem ersten ebenen Oberflächenbereich des Mitnehmers 20 eingebracht, dessen Normalenrichtung parallel zur axialen Richtung ausgerichtet ist. Die zweite Ringnut ist ebenfalls in einem zweiten ebenen Oberflächenbereich des Mitnehmers 20 eingebracht, der parallel zum ersten Oberflächenbereich ausgerichtet ist und/oder axial vom ersten Oberflächenbereich beabstandet ist.

Bei weiteren erfindungsgemäßen Ausführungsbeispielen sind mehrere der vorgenannten Federteile auf die Außenverzahnung aufgesteckt, wobei die Federteile in Umfangsrichtung voneinander beabstandet sind.

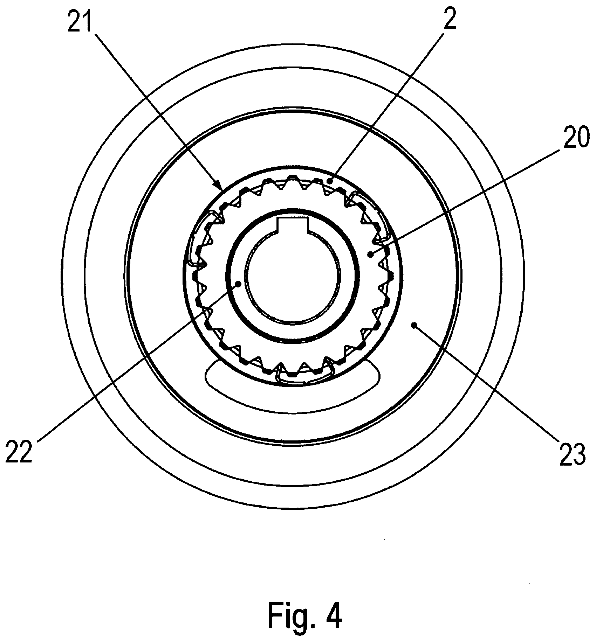

Bei weiteren erfindungsgemäßen Ausführungsbeispielen ist das Federteil nicht auf die Außenverzahnung des Mitnehmers 20, sondern auf die Innenverzahnung des Bremsbelagträgers 23 aufgesteckt, wie in Figur 4 gezeigt. Dabei sind dann die erste und zweite Ringnut am Bremsbelagträger 23 angeordnet, insbesondere wiederum in zueinander entgegengesetzter Richtung geöffnet sind und koaxial zueinander ausgerichtet, auf demselben Radialabstand angeordnet sind.

### Bezugszeichenliste

1 Bügelbereich
2 Endbereich
3 Jochbereich
20 Mitnehmer
21 Ringnut
22 Welle, insbesondere Rotorwelle
23 Bremsbelagträger

## Patentansprüche

1. Bremsanordnung mit einem eine Verzahnung aufweisenden Verzahnteil und zumindest einem Federteil,
wobei das Federteil ein Jochbereich aufweist, das mit einem ersten Bügelbereich (1) des Federteils verbunden ist, welches an seinem vom Jochbereich abgewandten Ende mit einem ersten Endbereich (2) des Federteils verbunden ist,
wobei das Federteil auf die Verzahnung derart aufgesteckt ist, dass
- der erste Bügelbereich (1) des Federteils zumindest teilweise in einer Zahnlücke der Verzahnung angeordnet ist,
**dadurch gekennzeichnet, dass** das Federteil auf die Verzahnung weiterhin derart aufgesteckt ist, dass
- der Jochbereich (3) in eine erste, insbesondere an einer ersten Stirnseite des Verzahnteils, am Verzahnteil ausgebildete Ringnut (21) eingreift,
- der erste Endbereich (2) in eine zweite, insbesondere an der anderen Stirnseite des Verzahnteils, am Verzahnteil ausgebildete Ringnut (21) eingreift
insbesondere wobei die erste Ringnut (21) eine ins Verzahnteil eingebrachte, teilweise oder ganz um die Drehachse des Verzahnteils umlaufende Nut ist,
insbesondere wobei die zweite Ringnut (21) eine ins Verzahnteil eingebrachte, teilweise oder ganz um die Drehachse des Verzahnteils umlaufende Nut ist.

2. Bremsanordnung nach Anspruch 1,
**dadurch gekennzeichnet, dass**
ein vom ersten Bügelbereich (1) beabstandeter zweiter Bügelbereich (1) des Federteils mit dem Jochteil verbunden ist, welcher an seinem vom Jochteil abgewandten Ende mit einem zweiten Endbereich (2) des Federteils verbunden ist,
- der zweite Bügelbereich (1) des Federteils zumindest teilweise in einer zweiten Zahnlücke der Verzahnung angeordnet ist,
- der zweite Endbereich (2) in die zweite am Verzahnteil ausgebildete Ringnut (21) eingreift.

3. Bremsanordnung nach einem der vorangegangenen Ansprüche,
**dadurch gekennzeichnet, dass**
die erste Ringnut (21) in einen ebenen Oberflächenbereich des Verzahnteils eingebracht ist, dessen Normalenvektor parallel zur axialen Richtung ausgerichtet ist,
wobei die Ringachse der ersten Ringnut (21) der Drehachse des Verzahnteils gleicht, insbesondere wobei die Nutöffnung der ersten Ringnut (21) zur axialen Richtung hin geöffnet ist,
insbesondere wobei die Ringnut (21) in Umfangsrichtung um die Drehachse herum ununterbrochen ausgeführt ist.

4. Bremsanordnung nach einem der vorangegangenen Ansprüche,
**dadurch gekennzeichnet, dass**
die zweite Ringnut (21) in einen zweiten ebenen Oberflächenbereich des Verzahnteils eingebracht ist, dessen Normalenvektor parallel zur axialen Richtung ausgerichtet ist,
wobei die Ringachse der zweiten Ringnut (21) der Drehachse des Verzahnteils gleicht,

5. Bremsanordnung nach einem der vorangegangenen Ansprüche,
**dadurch gekennzeichnet, dass**
die Verzahnung eine Außenverzahnung ist und der von der ersten und zweiten Ringnut (21) überdeckte, auf die Drehachse des Verzahnteils bezogene Radialabstandsbereich beabstandet ist von dem von der Verzahnung überdeckten Radialabstandsbereich und/oder radial innerhalb des von der Verzahnung überdeckten Radialabstandsbereichs angeordnet ist,
insbesondere wobei das Verzahnteil als Mitnehmer (20) ausgeführt ist.

6. Bremsanordnung nach einem der Ansprüche 1 bis 4,
**dadurch gekennzeichnet, dass**
die Verzahnung eine Innenverzahnung ist und der von der ersten und zweiten Ringnut (21) überdeckte, auf die Drehachse des Verzahnteils bezogene Radialabstandsbereich beabstandet ist von dem von der Verzahnung überdeckten Radialabstandsbereich und/oder radial außerhalb des von der Verzahnung überdeckten Radialabstandsbereichs angeordnet ist,
insbesondere wobei das Verzahnteil als Bremsbelagträger (23) ausgeführt ist.

7. Bremsanordnung nach einem der vorangegangenen Ansprüche,
**dadurch gekennzeichnet, dass**
die Bremsanordnung eine Welle (22), insbesondere Rotorwelle eines Elektromotors, aufweist,
wobei ein Mitnehmer (20) auf die Welle (22) aufgesteckt und mit der Welle (22) drehfest verbunden ist,
wobei ein Bremsbelagträger (23) auf den Mitnehmer (20) aufgesteckt ist und eine Innenverzahnung des Bremsbelagträgers (23) mit einer Außenverzahnung des Mitnehmers (20) im Eingriff ist, so dass der Bremsbelagträger (23) drehfest mit dem Mitnehmer (20) verbunden ist aber axial verschiebbar relativ zum Mitnehmer (20) angeordnet ist,
**wobei der Mitnehmer (20) das Verzahnteil bildet oder der Bremsbelagträger (23) das Verzahnteil bildet.**

8. Bremsanordnung nach einem der vorangegangenen Ansprüche,
**dadurch gekennzeichnet, dass**
die Bremsanordnung einen Magnetkörper, insbesondere ferromagnetischen Magnetkörper, aufweist, in welchem eine bestrombare Spule, insbesondere Spulenwicklung, aufgenommen ist,
wobei die Welle (22) mittels in einem Gehäuseteil, insbesondere Lagerflansch, aufgenommenen Lager drehbar gelagert ist, insbesondere relativ zum Magnetkörper,
wobei eine ferromagnetische Ankerscheibe axial zwischen dem Bremsbelagträger (23) und dem Magnetkörper angeordnet ist, wobei die Ankerscheibe drehfest mit dem Magnetkörper verbunden ist aber axial verschiebbar angeordnet ist, insbesondere relativ zum Magnetkörper,
wobei bei Bestromung der Spule die Ankerscheibe entgegen der von am Magnetkörper abgestützten Federelementen erzeugten Federkraft zum Magnetkörper hingezogen wird und bei Nichtbestromung der Spule die Ankerscheibe von den Federelementen derart auf den Bremsbelagträger (23) gedrückt wird, dass der Bremsbelagträger (23) auf eine auf der von der Ankerscheibe abgewandten Seite des Bremsbelagträgers (23) angeordnete Bremsfläche gedrückt wird,
insbesondere wobei die Bremsfläche
- entweder an einem Lagerflansch des Elektromotors ausgebildet ist, wobei im Lagerflansch ein die Rotorwelle drehbar lagerndes Lager aufgenommen ist und der Lagerflansch mit dem Magnetkörper drehfest verbunden ist,
- oder an einem mit dem Magnetkörper drehfest verbundenen Blechteil ausgebildet ist.

9. Bremsanordnung nach einem der vorangegangenen Ansprüche,
**dadurch gekennzeichnet, dass**
der an der ersten Ringnut (21) abgestützte, erste Bügelbereich (1) elastisch derart ausgelenkt ist, dass
der erste Bügelbereich (1) auf einen ersten Zahnkopf der Verzahnung eines zweiten Verzahnteils drückt, insbesondere in radialer Richtung drückt, wobei die Verzahnung des zweiten Verzahnteils mit der Verzahnung des ersten Verzahnteils im Eingriff ist
und/oder dass
der an der zweiten Ringnut (21) abgestützte, zweite Bügelbereich (1) elastisch derart ausgelenkt ist, dass
der zweite Bügelbereich (1) auf einen zweiten Zahnkopf der Verzahnung eines zweiten Verzahnteils drückt, insbesondere in radialer Richtung drückt, wobei die Verzahnung des zweiten Verzahnteils mit der Verzahnung des ersten Verzahnteils im Eingriff ist.

10. Bremsanordnung nach einem der vorangegangenen Ansprüche,
**dadurch gekennzeichnet, dass**
das Federteil als Biegeteil aus Runddraht hergestellt ist.

11. Bremsanordnung nach einem der vorangegangenen Ansprüche 2 bis 10,
**dadurch gekennzeichnet, dass**
die beiden Endbereiche (2) des Federteils in Umfangsrichtung voneinander beabstandet sind und/oder auf derselben zweiten axialen Position angeordnet sind.

12. Bremsanordnung nach Ansprüche 11 und 2,
**dadurch gekennzeichnet, dass**
der Jochbereich (3) an einer ersten axialen Position angeordnet ist und die Bügelbereiche (1) sich von der ersten zur zweiten axialen Position erstrecken.

13. Bremsanordnung nach einem der vorangegangenen Ansprüche,
**dadurch gekennzeichnet, dass**
die Verzahnung eine Geradverzahnung ist.

14. Bremsanordnung nach einem der vorangegangenen Ansprüche,
**dadurch gekennzeichnet, dass**
zum Federteil identisch und/oder gleichartig ausgebildete weitere Federteile am Umfang des Verzahnteils angeordnet sind, insbesondere auf demselben Radialabstand und/oder in Umfangsrichtung voneinander regelmäßig und/oder gleichmäßig beabstandet.

15. Bremsanordnung nach einem der vorangegangenen Ansprüche 7 bis 13,
**dadurch gekennzeichnet, dass**
der Bremsbelagträger (23) aus einem weicheren Material als der Mitnehmer (20) ausgeführt ist
und/oder dass
der Mitnehmer (20) aus Metall, insbesondere aus Stahl, ausgeführt ist.

## Claims

1. A braking arrangement with a toothed part having gearing, and with at least one spring part,
wherein
the spring part has a yoke region which is connected to a first bow region (1) of the spring part which is connected at its end remote from the yoke region to a first end region (2) of the spring part,
wherein the spring part is mounted on the gearing such that
- the first bow region (1) of the spring part is arranged at least partially in a tooth space of the gearing,
**characterised in that** the spring part is furthermore mounted on the gearing such that
- the yoke region (3) engages in a first annular groove (21) formed on the toothed part, in particular on a first end face of the toothed part,
- the first end region (2) engages in a second annular groove (21) formed on the toothed part, in particular formed on the other end face of the toothed part,
in particular with the first annular groove (21) being a groove which is formed in the toothed part and which partially or entirely encircles the axis of rotation of the toothed part,
in particular with the second annular groove (21) being a groove which is formed in the toothed part and which partially or entirely encircles the axis of rotation of the toothed part.

2. A braking arrangement according to claim 1,
**characterised in that**
a second bow region (1), spaced apart from the first bow region (1), of the spring part is connected to the yoke part, which bow region is connected at its end remote from the yoke part to a second end region (2) of the spring part,
- the second bow region (1) of the spring part is arranged at least partially in a second tooth space of the gearing,
- the second end region (2) engages in the second annular groove (21) formed on the toothed part.

3. A braking arrangement according to one of the preceding claims,
**characterised in that**
the first annular groove (21) is formed in a flat surface region of the toothed part, the normal vector of which is oriented parallel to the axial direction,
with the ring axis of the first annular groove (21) being the same as the axis of rotation of the toothed part,
in particular with the groove opening of the first annular groove (21) being opened towards the axial direction,
in particular with the annular groove (21) being embodied uninterrupted around the axis of rotation in the circumferential direction.

4. A braking arrangement according to one of the preceding claims,
**characterised in that**
the second annular groove (21) is formed in a second flat surface region of the toothed part, the normal vector of which is oriented parallel to the axial direction,
with the ring axis of the second annular groove (21) being the same as the axis of rotation of the toothed part.

5. A braking arrangement according to one of the preceding claims,
**characterised in that**
the gearing is external gearing, and the radial distance region which is covered by the first and second annular grooves (21) and is relative to the axis of rotation of the toothed part is spaced apart from the radial distance region covered by the gearing and/or is arranged radially within the radial distance region covered by the gearing,
in particular with the toothed part being embodied as a driving element (20).

6. A braking arrangement according to one of claims 1 to 4,
**characterised in that**
the gearing is internal gearing, and the radial distance region which is covered by the first and second annular grooves (21) and is relative to the axis of rotation of the toothed part is spaced apart from the radial distance region covered by the gearing and/or is arranged radially outside the radial distance region covered by the gearing,
in particular with the toothed part being embodied as a brake lining carrier (23).

7. A braking arrangement according to one of the preceding claims,
**characterised in that**
the braking arrangement has a shaft (22), in particular rotor shaft of an electric motor,
with a driving element (20) being mounted on the shaft (22) and connected non-rotatably to the shaft (22),
with a brake lining carrier (23) being mounted on the driving element (20) and internal gearing of the brake lining carrier (23) meshing with external gearing of the driving element (20), so that the brake lining carrier (23) is connected non-rotatably to the driving element (20) but is arranged axially displaceably relative to the driving element (20),
with the driving element (20) forming the toothed part or the brake lining carrier (23) forming the toothed part.

8. A braking arrangement according to one of the preceding claims,
**characterised in that**
the braking arrangement has a magnet body, in particular ferromagnetic magnet body, in which an energisable coil, in particular coil winding, is received,
with the shaft (22) being rotatably borne, in particular relative to the magnet body, by means of bearings received in a housing part, in particular bearing flange,
with a ferromagnetic armature disc being arranged axially between the brake lining carrier (23) and the magnet body, with the armature disc being connected non-rotatably to the magnet body but being arranged axially displaceably, in particular relative to the magnet body,
with, when the coil is energised, the armature disc being drawn towards the magnet body counter to the spring force generated by spring elements which are supported on the magnet body, and when the coil is not energised the armature disc being pressed by the spring elements onto the brake lining carrier (23) such that the brake lining carrier (23) is pressed onto a braking face arranged on that side of the brake lining carrier (23) which is remote from the armature disc,
in particular with the braking face
- either being formed on a bearing flange of the electric motor, with a bearing which rotatably bears the rotor shaft being received in the bearing flange and the bearing flange being connected non-rotatably to the magnet body,
- or being formed on a sheet-metal part connected non-rotatably to the magnet body.

9. A braking arrangement according to one of the preceding claims,
**characterised in that**
the first bow region (1) which is supported on the first annular groove (21) is elastically deflected such that
the first bow region (1) presses, in particular presses in the radial direction, on a first tooth tip of the gearing of a second toothed part, with the gearing of the second toothed part meshing with the gearing of the first toothed part
and/or **in that**
the second bow region (1) which is supported on the second annular groove (21) is elastically deflected such that
the second bow region (1) presses, in particular presses in the radial direction, on a second tooth tip of the gearing of a second toothed part with the gearing of the second toothed part meshing with the gearing of the first toothed part.

10. A braking arrangement according to one of the preceding claims,
**characterised in that**
the spring part is produced as a bent part from round wire.

11. A braking arrangement according to one of the preceding claims 2 to 10,
**characterised in that**
the two end regions (2) of the spring part are spaced apart from each other in the circumferential direction and/or are arranged at the same second axial position.

12. A braking arrangement according to claims 11 and 2,
**characterised in that**
the yoke region (3) is arranged at a first axial position and the bow regions (1) extend from the first to the second axial position.

13. A braking arrangement according to one of the preceding claims,
**characterised in that**
the gearing is spur toothing.

14. A braking arrangement according to one of the preceding claims,
**characterised in that**
further spring parts which are configured identically to and/or in the same manner as the spring part are arranged on the circumference of the toothed part, in particular at the same radial distance and/or regularly and/or uniformly spaced apart from each other in the circumferential direction.

15. A braking arrangement according to one of the preceding claims 7 to 13,
**characterised in that**
the brake lining carrier (23) is made from a softer material than the driving element (20)
and/or **in that**
the driving element (20) is made of metal, in particular of steel.

## Revendications

1. Dispositif de freinage comprenant une pièce munie d'une denture, et au moins une pièce douée d'élasticité,
la pièce douée d'élasticité comportant une zone formant étrier, reliée à une première zone cintrée (1) de ladite pièce douée d'élasticité et reliée, par son extrémité tournée à l'opposé de ladite zone formant étrier, à une première région extrême (2) de ladite pièce douée d'élasticité, laquelle pièce douée d'élasticité est emboîtée sur la denture de façon telle que
- la première zone cintrée (1) de ladite pièce douée d'élasticité soit logée, au moins en partie, dans un entredent de la denture,
**caractérisé par le fait que** la pièce douée d'élasticité est par ailleurs emboîtée, sur la denture, de façon telle que
- la zone (3) formant étrier pénètre dans une première rainure annulaire (21) ménagée sur la pièce dentée, en particulier au niveau d'une première face extrême de ladite pièce dentée,
- la première région extrême (2) pénètre dans une seconde rainure annulaire (21) ménagée sur ladite pièce dentée, en particulier au niveau de l'autre face extrême de ladite pièce dentée,
sachant notamment que ladite première rainure annulaire (21) est une rainure pratiquée dans la pièce dentée et entourant, en partie ou en totalité, l'axe de rotation de ladite pièce dentée, étant notamment précisé que ladite seconde rainure annulaire (21) est une rainure pratiquée dans la pièce dentée et entourant, en partie ou en totalité, l'axe de rotation de ladite pièce dentée.

2. Dispositif de freinage selon la revendication 1,
**caractérisé par le fait**
**qu'**une seconde zone cintrée (1) de la pièce douée d'élasticité, située à distance de la première zone cintrée (1) et reliée à la zone formant étrier est reliée, par son extrémité tournée à l'opposé de ladite zone formant étrier, à une seconde région extrême (2) de ladite pièce douée d'élasticité,
- ladite seconde zone cintrée (1) de la pièce douée d'élasticité étant logée, au moins en partie, dans un second entredent de la denture,
- ladite seconde région extrême (2) pénétrant dans la seconde rainure annulaire (21) ménagée sur ladite pièce dentée.

3. Dispositif de freinage selon l'une des revendications précédentes,
**caractérisé par le fait que**
la première rainure annulaire (21) est pratiquée dans une région plane de la surface de la pièce dentée, dont le vecteur normal est orienté parallèlement à la direction axiale,
l'axe annulaire de ladite première rainure annulaire (21) étant égal à l'axe de rotation de ladite pièce dentée,
sachant notamment que l'ouverture de ladite première rainure annulaire (21) pointe vers la direction axiale,
étant précisé, en particulier, que ladite rainure annulaire (21) est de conception ininterrompue dans la direction périphérique tout autour dudit axe de rotation.

4. Dispositif de freinage selon l'une des revendications précédentes,
**caractérisé par le fait que**
la seconde rainure annulaire (21) est pratiquée dans une seconde région plane de la surface de la pièce dentée, dont le vecteur normal est orienté parallèlement à la direction axiale,
l'axe annulaire de ladite seconde rainure annulaire (21) étant égal à l'axe de rotation de ladite pièce dentée.

5. Dispositif de freinage selon l'une des revendications précédentes,
**caractérisé par le fait que**
la denture est une denture extérieure et la zone d'espacement radial, rapportée à l'axe de rotation de la pièce dentée et couverte par les première et seconde rainures annulaires (21), est située à distance de la zone d'espacement radial couverte par la denture, et/ou radialement à l'intérieur de ladite zone d'espacement radial couverte par la denture,
ladite pièce dentée étant notamment réalisée en tant qu'organe d'entraînement (20).

6. Dispositif de freinage selon l'une des revendications 1 à 4,
**caractérisé par le fait que**
la denture est une denture intérieure et la zone d'espacement radial, rapportée à l'axe de rotation de la pièce dentée et couverte par les première et seconde rainures annulaires (21), est située à distance de la zone d'espacement radial couverte par la denture, et/ou radialement à l'extérieur de ladite zone d'espacement radial couverte par la denture,
ladite pièce dentée étant notamment réalisée en tant que support (23) de garniture de freinage.

7. Dispositif de freinage selon l'une des revendications précédentes,
**caractérisé par le fait que**
ledit dispositif de freinage comporte un arbre (22), en particulier un arbre rotorique d'un moteur électrique,
un organe d'entraînement (20) étant emboîté sur ledit arbre (22), et relié audit arbre (22) avec verrouillage rotatif,
un support (23) de garniture de freinage étant enfiché sur l'organe d'entraînement (20), et une denture intérieure dudit support (23) de garniture de freinage étant en prise avec une denture extérieure dudit organe d'entraînement (20), de façon telle que ledit support (23) de garniture de freinage soit relié audit organe d'entraînement (20) avec verrouillage rotatif, mais avec faculté de déplacement axial par rapport audit organe d'entraînement (20),
sachant que l'organe d'entraînement (20) forme la pièce dentée, ou que le support (23) de garniture de freinage forme ladite pièce dentée.

8. Dispositif de freinage selon l'une des revendications précédentes,
**caractérisé par le fait que**
ledit dispositif de freinage est muni d'un corps magnétique, notamment d'un corps ferromagnétique logeant une bobine pouvant être alimentée en courant, un enroulement de bobine en particulier,
l'arbre (22) étant monté à rotation, notamment par rapport audit corps magnétique, au moyen d'un palier intégré dans une partie formant carter, dans une bride de montage en particulier, sachant qu'un disque d'induit ferromagnétique est interposé axialement entre le support (23) de garniture de freinage et ledit corps magnétique, lequel disque d'induit est relié audit corps magnétique avec verrouillage rotatif, mais agencé avec faculté de déplacement axial vis-à-vis dudit corps magnétique en particulier,
auquel cas, lorsque la bobine est alimentée en courant, le disque d'induit est attiré vers le corps magnétique en opposition à la force élastique engendrée par des éléments doués d'élasticité prenant appui sur ledit corps magnétique et, lorsque ladite bobine n'est pas alimentée en courant, ledit disque d'induit est pressé sur le support (23) de garniture de freinage, par lesdits éléments doués d'élasticité, de façon telle que ledit support (23) de garniture de freinage soit pressé contre une surface de freinage située du côté dudit support (23) de garniture de freinage qui est tourné à l'opposé dudit disque d'induit,
sachant notamment que ladite surface de freinage
- est façonnée sur une bride de montage du moteur électrique, ladite bride de montage logeant un palier qui assure le montage en rotation de l'arbre rotorique, et ladite bride de montage étant reliée au corps magnétique avec verrouillage rotatif,
- ou bien est façonnée sur une pièce en tôle reliée audit corps magnétique avec verrouillage rotatif.

9. Dispositif de freinage selon l'une des revendications précédentes,
**caractérisé par le fait que**
la première zone cintrée (1) prenant appui sur la première rainure annulaire (21) est déviée élastiquement de façon telle que
ladite première zone cintrée (1) exerce une pression, notamment une pression dans la direction radiale, sur un premier sommet de dent de la denture d'une seconde pièce dentée, laquelle denture de la seconde pièce dentée est en prise avec la denture de la première pièce dentée ;
et/ou **par le fait que**
la seconde zone cintrée (1) prenant appui sur la seconde rainure annulaire (21) est déviée élastiquement de façon telle que
ladite seconde zone cintrée (1) exerce une pression, notamment une pression dans la direction radiale, sur un second sommet de dent de la denture d'une seconde pièce dentée, laquelle denture de la seconde pièce dentée est en prise avec la denture de la première pièce dentée.

10. Dispositif de freinage selon l'une des revendications précédentes,
**caractérisé par le fait que**
la pièce douée d'élasticité est fabriquée en tant que pièce cintrée en fil métallique rond.

11. Dispositif de freinage selon l'une des revendications 2 à 10 précédentes,
**caractérisé par le fait que**
les deux régions extrêmes (2) de la pièce douée d'élasticité sont distantes l'une de l'autre dans la direction périphérique, et/ou occupent le même second emplacement axial.

12. Dispositif de freinage selon les revendications 11 et 2,
**caractérisé par le fait que**
la zone (3) formant étrier occupe un premier emplacement axial, et les zones cintrées (1) s'étendent du premier au second emplacement axial.

13. Dispositif de freinage selon l'une des revendications précédentes,
**caractérisé par le fait que**
la denture est une denture droite.

14. Dispositif de freinage selon l'une des revendications précédentes,
**caractérisé par le fait que**
d'autres pièces douées d'élasticité, de conception identique à celle de la pièce douée d'élasticité et/ou d'un type offrant une similitude avec cette dernière, sont implantées sur le pourtour de la pièce dentée, en particulier à la même distance radiale et/ou en étant régulièrement et/ou uniformément espacées les unes des autres dans la direction périphérique.

15. Dispositif de freinage selon l'une des revendications 7 à 13 précédentes,
**caractérisé par le fait que**
le support (23) de garniture de freinage est réalisé en un matériau plus tendre que celui de l'organe d'entraînement (20) ;
et/ou **par le fait que**
ledit organe d'entraînement (20) est réalisé en métal, notamment en acier.
